# EUROPÄISCHE PATENTANMELDUNG

(11) **EP 1 741 936 A1**
(43) Veröffentlichungstag der Anmeldung: **10.01.2007**
(21) Anmeldenummer: 05014830.3
(22) Anmeldetag: 08.07.2005
(51) Int. Cl.: F15B 13/04, F16K 31/06

(54) **Fördermengenregelventil für liquide Medien**

(71) Anmelder: THOMAS MAGNETE GmbH, 57557 Herdorf (DE)
(72) Erfinder: Petri, Wolfgang, 57290 Neunkirchen (DE); Leinweber, Marc, 57290 Neunkirchen (DE)
(74) Vertreter: Köchling, Conrad-Joachim

(57) **Zusammenfassung**

Um ein Fördermengenregelventil für liquide Medien, insbesondere zur Regelung der Ölfördermenge einer Schmierölpumpe, wobei das Ventil eine hydraulische Fördermengenregelung mit einem Schieberventil mit vorsteuerschieber (5) und einem Druckminderventil mit ventilschieber (2) aufweist zu schaffen, welches einfach herzustellen ist, insbesondere einen einfach herzustellenden Steuerblock aufweist, welcher einfach einzustellen ist und welcher in einer kompakten Bauform zur Verfügung steht, wird vorgeschlagen, dass der Vorsteuerschieber (5) und der Ventilschieber (2) in einer Ventilhülse (1) axial verschieblich hintereinander angeordnet sind, die in einen Steuerblock (6) eingesetzt ist, wobei der Steuerblock (6) Bohrungen (PE,PA,13,20) zum Anschluss an einen Pumpenausgang, einen Steuereingang der Pumpe und einen drucklosen Speicher aufweist, und die Ventilhülse (1) Bohrungen (T,T2,P0,P2,P3,A) aufweist, die mit der oder den Steuerblockbohrungen kommunizieren, die an den drucklosen Speicher, an den Pumpenausgang und an den Steuereingang der Pumpe angeschlossen oder anschließbar sind.

## Beschreibung

Die Erfindung betrifft ein Fördermengenregelventil für liquide Medien, insbesondere zur Regelung der Ölfördermenge einer Schmierölpumpe, wobei das Ventil eine hydraulische Fördermengenregelung mit einem Schieberventil mit Vorsteuerschieber und einem Druckminderventil mit Ventilschieber aufweist.

Aus der DE 103 24 093 A1 ist ein gattungsgemäßes Fördermengenregelventil bekannt. Hierbei sind das Schieberventil und das Druckminderventil in einem gemeinsamen Steuerblock (Gehäuse) angeordnet, wobei die beiden Ventile in separate Bohrungen des Gehäuses eingebracht sind. Hierdurch ist der Herstellungsaufwand relativ groß und auch die Einstellung eines solchen Fördermengenregelventils ist relativ aufwändig, da beide Ventile separat eingestellt werden müssen. Insbesondere müssen in dem Steuerblock mehrere Bohrungen zur Aufnahme der ventile und zur entsprechenden Verbindung der ventile vorgesehen sein.

Ausgehend von diesem Stand der Technik liegt der Erfindung die Aufgabe zugrunde, ein Fördermengenregelventil zu schaffen, welches einfach herzustellen ist, insbesondere einen einfach herzustellenden Steuerblock aufweist, welches einfach einzustellen ist und welches in einer kompakten Bauform zur Verfügung steht.

Zur Lösung dieser Aufgabe wird vorgeschlagen, dass der Vorsteuerschieber und der Ventilschieber in einer Ventilhülse axial verschieblich hintereinander angeordnet sind, die in einem Steuerblock eingesetzt ist, wobei der Steuerblock Bohrungen zum Anschluss an einen Pumpenausgang, einen Steuereingang der Pumpe und zu einem drucklosen Speicher (Tank) aufweist, und die Ventilhülse Bohrungen aufweist, die mit der oder den Steuerblockbohrungen kommunizieren, die an den drucklosen Speicher (Tank), an den Pumpenausgang und an den Steuereingang der Pumpe angeschlossen oder anschließbar sind.

Gemäß dieser Ausbildung ist es lediglich erforderlich, den Steuerblock mit lediglich einer Aufnahmebohrung für das Schieberventil und das Druckminderventil auszustatten, wobei das Gehäuse lediglich eine weitere Bohrung zum Anschluss an den Pumpenausgang, eine Bohrung für den Anschluss an den Steuereingang der Pumpe und eine Bohrung für den Anschluss an einen drucklosen Speicher (Tank), beispielsweise eine Ölwanne, aufweisen muss. In dem Steuerblock ist die entsprechende Ventilhülse angeordnet, die weitere Bohrungen aufweist und den Vorsteuerschieber sowie den Ventilschieber axial hintereinander angeordnet in einer gemeinsamen Kammer aufnimmt.

vorzugsweise ist dabei vorgesehen, dass die Ventilhülse einstückig ausgebildet ist.

Insbesondere ist vorzugsweise vorgesehen, dass die Ventilhülse in eine Bohrung des Steuerblocks eingesetzt ist, wobei an das den Vorsteuerschieber aufnehmende Ende der ventilhülse ein elektrischer Hubmagnet mit einer Spule einem Ankerkolben und einer Ankerstange angeschlossen ist, dessen Gehäusekappe am Steuerblock befestigt ist und dessen Polkern gedichtet in die Mündung des Steuerblocks eingreift und mit der Ventilhülse verbunden ist, insbesondere mittels einer Bördelung befestigt ist, wobei die Ankerstange auf das dieser zugewandte Ende des Vorsteuerschiebers einwirken kann oder einwirkt.

Dabei ist bevorzugt vorgesehen, dass der Vorsteuerschieber an seinem der Ankerstange zugewandten Ende gegen eine Feder verschieblich an der Ventilhülse gehalten ist.

Zudem kann vorgesehen sein, dass die Druckfeder als Schraubendruckfeder ausgebildet ist, auf das Ende des Vorsteuerschiebers aufgesteckt ist und sich mit dem einen Ende an der Ventilhülse und mit dem anderen Ende an einem am Endbereich des Vorsteuerschiebers angeordneten Anschlag abstützt.

Auch ist bevorzugt, dass der Vorsteuerschieber bei stromlosem Hubmagnet mit seinem dem Hubmagnet zugewandten Ende am Polkern anliegt.

Bevorzugt ist ferner vorgesehen, dass der vorsteuerschieber eine durchgehende Axialbohrung aufweist.

Auch ist bevorzugt, dass der Vorsteuerschieber eine die Axialbohrung kreuzende durchgehende Querbohrung aufweist, so dass je nach Position des Ankerkolbens, der damit verbundenen Ankerstange und damit des Vorsteuerschiebers entweder bei stromlosem Hubmagnet ein Raum zwischen dem Ende des Vorsteuerschiebers und dem Ventilschieber mit der Bohrung der ventilhülse verbunden ist, die an den drucklosen Speicher (Tank) angeschlossen ist, oder bei betätigtem Hubmagnet der Raum mit einer Bohrung der Ventilhülse kommuniziert, die mit dem Pumpenausgang kommuniziert.

Zudem ist vorgesehen, dass die Mündungen der Querbohrung in eine Ringnut am Außenmantel des ventilschiebers übergehen.

Eine vorteilhafte Weiterbildung wird darin gesehen, dass die mit dem drucklosen Speicher (Tank) kommunizierende Bohrung des Gehäuses an dem Endbereich der ventilhülse vorgesehen ist, in dem das dem Vorsteuerschieber abgewandte Ende des Ventilschiebers angeordnet ist.

Bevorzugt ist dabei vorgesehen, dass die Bohrung der Ventilhülse über eine axiale Nut im Mantel der Ventilhülse mit der Bohrung des Gehäuses kommunizierend verbunden ist.

Auch ist bevorzugt, dass der Ventilschieber sich mit seinem dem Vorsteuerschieber abgewandten Ende an einer Druckfeder abstützt, mittels eines einstellbaren Federtellers mit Innenbohrung, die mit ihrem anderen Ende an der ventilhülse gehalten ist.

Weiter ist bevorzugt, dass die Feder als Schraubendruckfeder ausgebildet ist.

Des Weiteren ist hierbei bevorzugt, dass die Druckfeder an einem Federteller mit Innenbohrung abgestützt ist, welches einen Ventilhülsenausgangskanal bildet, der mit einer Bohrung des Steuerblocks kommuniziert, die wiederum mit dem drucklosen Speicher (Tank) kommuniziert.

Eine besonders bevorzugte Weiterbildung wird darin gesehen, dass das dem Vorsteuerschieber zugewandte Ende des ventilschiebers abgestuft ist und in einen entsprechend gestuften Bereich der Ventilhülse eingesetzt ist, so dass der Druck im Anschluss der Bohrung die zum Steuereingang der Pumpe führt durch die Position des Ventilschiebers bestimmt ist, wobei der zu regelnde Druck alternativ auf die Ringfläche des gestuften Bereichs des Ventilschiebers oder auf die Ringfläche und die Stirnfläche des Ventilschiebers wirkt.

Dabei kann vorgesehen sein, dass die Bohrung der Ventilhülse, die mit dem Pumpenausgang kommuniziert, im Bereich der Stufe, die die Ringfläche bildet, in die Ventilhülse mündet.

Zudem kann hierbei vorgesehen sein, dass der als Stufenkolben ausgebildete Ventilschieber so gestaltet ist, dass eine hydraulische Leckage zwischen den Räumen vor der Stirnfläche des Ventilschiebers und der Ringfläche durch die gewählte Passung zwischen Ventilhülse und dem verjüngten Ende des Stufenkolbens des Ventilschiebers nicht wesentlich störend ist.

Hierbei ist zudem vorgesehen, dass die enge Passung durch mechanischen Kontakt zwischen Ventilhülse und Ventilschieber nur im Abschnitt des großen Durchmessers des Ventilschiebers erfolgt.Des Weiteren ist bevorzugt vorgesehen, dass an das unverjüngte Ende des Stufenkolbens des ventilschiebers ein verjüngter axialer Zylinder anschließt, der in einem im Durchmesser zum verjüngten Ende gleiches Endstück übergeht, an dem sich die Feder abstützt, wobei die Ventilhülse im Bereich des Übergangs vom Stufenkolben zum axialen Zylinder die Bohrung, die mit dem Pumpenausgang kommuniziert, und im von dem Endstück überdeckbaren Bereich die Bohrung, die mit dem drucklosen Speicher kommuniziert, aufweist.

Auch ist vorgesehen, dass die Ventilhülse in dem Bereich, in dem die Bohrungen angeordnet sind, die mit dem Pumpenausgang kommunizieren, eingeschnürt ist und in den eingeschnürten Bereich die Steuerblockbohrung für den Pumpenausgang mündet.

Zudem ist vorgesehen, dass die Bohrungen oder Nuten der ventilhülse, die überschüssiges Steuer- und/oder Lecköl drucklos in einen drucklosen Speicher (Tank) führen, in einem radial und einseitig axial abgesetzten Bereich der Ventilhülse ausmünden, der mit einer Ablaufbohrung des Gehäuses kommuniziert.

vorzugsweise ist vorgesehen, dass der Durchmesser des Ventilschiebers und die Druckfeder so dimensioniert sind, dass bei einem vorbestimmten Regeldruck sich die um den axialen Zylinder gebildete Ringnut des Ventilschiebers in einer durch eine Druckwaage gebildete Position zu den Steuerbohrungen befindet, wenn auf beide Stirnflächen der Regeldruck wirkt, weil der Raum und die Bohrung durch den Vorsteuerschieber kommunizierend verbunden sind, wobei ferner die Bestimmung eines zweiten vorbestimmten Regelpunktes dadurch erfolgt, dass das Flächenverhältnis von Stirnfläche des Ventilschiebers zuzüglich der Ringfläche der Stufe von dessen Stufenkolben zu der Ringfläche gleich dem Verhältnis der beiden Drücke ist.

Ausführungsbeispiele der Erfindung sind in der Zeichnung dargestellt und im Folgenden näher beschrieben.

Es zeigt:
- Figur 1: eine erfindungsgemäße konstruktive Lösung im Mittel-Längsschnitt gesehen;
- Figur 2: eine variante in ähnlicher Ansicht.

Erfindungsgemäß ist ein Fördermengenregelventil 100 für liquide Medien, insbesondere zur Regelung der Ölfördermenge einer Schmierölpumpe vorgesehen, wobei das Förderventil 100 eine hydraulische Fördermengenregelung mit einem Schieberventil 200 mit Vorsteuerschieber 5 und einem Druckminderventil 300 mit ventilschieber 2 aufweist. Erfindungsgemäß ist eine Kombination eines 3/2- Wege-Schieberventils mit einem 3/2-Wege- Druckminderventil vorgesehen. Bei dem Schieberventil 200 wird die Position des Vorsteuerschiebers 5 durch ein Kraftgleichgewicht zwischen einer Druckfeder 16 und einer Kraft von dem Ankerkolben 3 eines Hubmagneten 400 bestimmt. Bei dem Druckminderventil 300 wird der Druck in Anschluss (A) durch die Position des Schiebers 2 definiert, wobei der zu regelnde Druck P wahlweise auf eine Ringfläche (PR) des Ventilschiebers 2 oder auf eine Ring- und Stirnfläche (PR und PV1) des Schiebers wirkt. Die Ausbildung ist so vorgenommen, dass die beiden Schieber (5 und 2) in einer einstückig gefertigten Ventilhülse 1 axial hintereinander angeordnet sind und verschieblich geführt sind.

Der Hubmagnet 400 kann bei einer solchen Vorrichtung auf der axialen Stirnseite der ventilhülse 1 auf dem Steuerblock 6 befestigt werden, um eine Kraftwirkung auf den Vorsteuerschieber 5 ausüben zu können. Hierzu ist die Ventilhülse 1 mit einem Ringflansch B am Polkern 7 des Hubmagneten eingebördelt und so gehalten. Als Besonderheit ist vorgesehen, dass ein Druckgefälle zwischen den Stirnseiten (PV1) des Vorsteuerschiebers 5 und dem Raum im Inneren der Spule 11 des Hubmagneten (mit PV2 gekennzeichnet) durch eine zentrale durchgehende Längsbohrung (C) im Vorsteuerschieber 5 vermieden wird. Hierdurch wird ein Druckausgleich geschaffen. Des Weiteren ist die Längsbohrung (C) im Vorsteuerschieber 5 durch eine Querbohrung (D) hydraulisch mit einem Ringkanal oder einer Ringnut verbunden, die im Außenmantel des Vorsteuerschiebers 5 vorgesehen ist. Diese Anordnung des Ringkanals oder der Ringnut dient dazu, dass je nach Position des Ankerkolbens 3, der Ankerstange 4 und damit des Vorsteuerschiebers 5 der Raum (PV1) entweder zu einem drucklosen Speicher (Tank), beispielsweise der Ölwanne, über eine Bohrung (T1) verbunden ist und damit auf niedrigem Druckniveau liegt oder in einer anderen Position (PV1) mit der Bohrung (P3) verbunden ist, die von dem Pumpenausgang führt, beziehungsweise mit diesem verbunden ist.

Die Stirnfläche 14 des Ventilschiebers 2 ist von der Ringfläche (PR) des Ventilschiebers 2 durch eine Stufe getrennt. Die Stufe ist in den Ventilschieber 2 eingearbeitet und analog passend in der ventilhülse 1 ausgeformt. Der Stufenkolben des Ventilschiebers 2 ist so ausgelegt, dass eine hydraulische Leckage zwischen den beiden Räumen (PV1 und PV2) durch die gewählte Passung zwischen Ventilhülse 1 und der Stufe beziehungsweise dem verjüngten Ende (G). Diese Passung ist dabei so gewählt, dass ein mechanischer Kontakt zwischen der Ventilhülse 1 und dem ventilschieber 2 nur auf dem größten Durchmesser des Ventilschiebers 2 erfolgt.

Die gesamte Anordnung ist in einen Steuerblock 6 eingesetzt, der entsprechende Zulaufbohrungen und Kanäle hat. Insbesondere weist der Steuerblock eine Bohrung P auf, die an einen Pumpenausgang angeschlossen wird, eine Bohrung A, die an den Steuereingang der Pumpe PE angeschlossen werden kann und eine Bohrung 13, die an einen drucklosen Speicher (Tank) 19, insbesondere eine Ölwanne angeschlossen werden kann. Durch die Bohrung (PA) werden die Bohrungen P3, P2 und P0 mit Fluid versorgt, das den zu regelnden Druck P aufweist. Die Bohrung A steht mit einer entsprechenden Bohrung der Ventilhülse 1 in Verbindung, die mit dem Ventilschieber 2 funktionell verbunden ist. Die Tankbohrung 13 steht mit einer Steuerbohrung T sowie einer Ablaufbohrung T2 und einer axialen Bohrung F oder Axialnut T3 in Verbindung. Gemäß der Erfindung wird die gesamte Anordnung über einen einzigen Kanal im Steuerblock mit Fluid versorgt, wobei das Fluid über eine Ringnut E in der Ventilhülse 1 über entsprechende Bohrungen in die Räume P3,P2 und P0 geleitet wird. Die gesamte in einen Steuerblock 6, der entsprechende Zulaufbohrungen und Kanäle hat, eingesetzte Anordnung bewirkt, dass durch die entsprechenden Bohrungen überschüssiges Steuer- und Lecköl über die Bohrung T1 und eine axiale Bohrung F oder Axialnut T3 und die Steuerbohrung T sowie den Arbeitsraum T2 drucklos in die Ölwanne oder den Tank geführt wird. Hierbei wird das Steueröl aus der Bohrung T1 über die Bohrung F beziehungsweise die Längsnut T3 sowie die Bohrung T beziehungsweise T2 direkt über einen entsprechend gestalteten Steuerblock in den drucklosen Speicher (Tank) 19 geführt und kann dahin abtropfen. Der Durchmesser des Ventilschiebers 2 und die am unteren Ende der Ventilhülse 1 als Gegenlager dienende Druckfeder 15 sind so dimensioniert, dass bei einem vorbestimmten Regeldruck sich die Ringnut H relativ vom Ventilschieber 2 in einer durch eine Druckwaage bestimmenden Position zu den Steuerbohrungen P0 und T befindet, wenn auf beiden Stirnflächen der Regeldruck anliegt.

Dies ist dann der Fall, wenn PV1 und P3 durch den Vorsteuerschieber 5 miteinander in verbindung stehen. Die Festlegung eines zweiten vorbestimmten Regelpunktes erfolgt dadurch, dass das Verhältnis von Stirnfläche PV1 + G zur Ringfläche .(bei P2) gleich dem Verhältnis der beiden Drücke ist.

Wie schon ausgeführt sind der Vorsteuerschieber 5 und der Ventilschieber 2 in einer Ventilhülse 1 axial verschieblich hintereinander angeordnet, die den Steuerblock 6 eingesetzt ist. Der Steuerblock 6 weist Bohrungen P,PA,16,18 auf, während die Ventilhülse 1 Bohrungen T,T2,P0,P2,P3 und A und F aufweist. Diese kommunizieren mit den entsprechenden Gehäusebohrungen, die an den drucklosen Speicher (Tank) 19, an den Pumpenausgang beziehungsweise an den Steuereingang der Pumpe PA angeschlossen sind. Die Ventilhülse ist im Ausführungsbeispiel einstückig ausgebildet, sie könnte aber auch aus mehreren Hülsenteilen zusammengefügt sein. Die Ventilhülse 1 ist in die entsprechende Bohrung des Gehäuses 6 eingesetzt, wobei an das den Vorsteuerschieber 5 aufnehmende Ende der Ventilhülse 1 ein elektrischer Hubmagnet 400 mit Spule 11 und Ankerkolben 3 sowie Ankerstange 4 angeschlossen ist, dessen Gehäusekappe 12 am Steuerblock 6 befestigt ist. Der Polkern 7 ist gedichtet 8 in die Mündung des Steuerblocks 6 eingesetzt und mit der ventilhülse 1 verbunden (gebördelter Ringflansch B), wobei die Ankerstange 4 auf das dieser zugewandte Ende des Vorsteuerschiebers 5 einwirken kann oder einwirkt. Der Vorsteuerschieber 5 ist an seinem der Ankerstange 4 zugewandten Ende gegen eine Druckfeder 16 verschieblich an der ventilhülse 1 gehalten. Die Druckfeder 16 ist beispielsweise als Schraubendruckfeder ausgebildet und auf das Ende des Vorsteuerschiebers 5 aufgesteckt, wobei sie sich mit dem einen Ende an der Ventilhülse 1 und mit dem anderen Ende an einem am Endbereich des Vorsteuerschiebers 5 angeordneten Anschlag abstützt. Der Vorsteuerschieber 5 liegt bei stromlosem Hubmagnet mit seinem dem Hubmagnet 400 zugewandten Ende am Polkern 7 an. Der Vorsteuerschieber 5 weist eine durchgehende Längsbohrung (C) auf, wobei der Vorsteuerschieber 5 zusätzlich eine die Längsbohrung C kreuzende durchgehende Querbohrung D aufweist, die in die Ringnut mündet. Die Ringnut ist so orientiert und angeordnet, dass je nach Position des Ankerkolbens 3, der damit verbundenen Ankerstange 4 und damit des Vorsteuerschiebers 5 entweder bei stromlosem Hubmagnet ein Raum PV1 zwischen dem Ende des Vorsteuerschiebers 5 und dem entsprechenden Ende des Ventilschiebers 2 mit der Bohrung T1 der Ventilhülse 1 verbunden ist, die an den drucklosen Speicher angeschlossen ist, oder bei betätigtem Hubmagnet der Raum PV1 mit einer Bohrung P3 der Ventilhülse 1 kommuniziert, die mit dem Pumpenausgang in Verbindung steht. Die Mündungen der Querbohrung D gehen in eine Ringnut am Außenmantel des Vorsteuerschiebers 5 über, so dass die Querbohrung zwar im Durchmesser klein gehalten werden kann, der Mündungsbereich aber relativ breit ausgebildet ist.

Die mit dem drucklosen Speicher (Tank) 19 kommunizierende Bohrung 13 des Steuerblocks 6 ist an dem Endbereich der Ventilhülse 1 vorgesehen, in dem das dem Vorsteuerschieber 5 abgewandte Ende des Ventilschiebers 2 angeordnet ist.

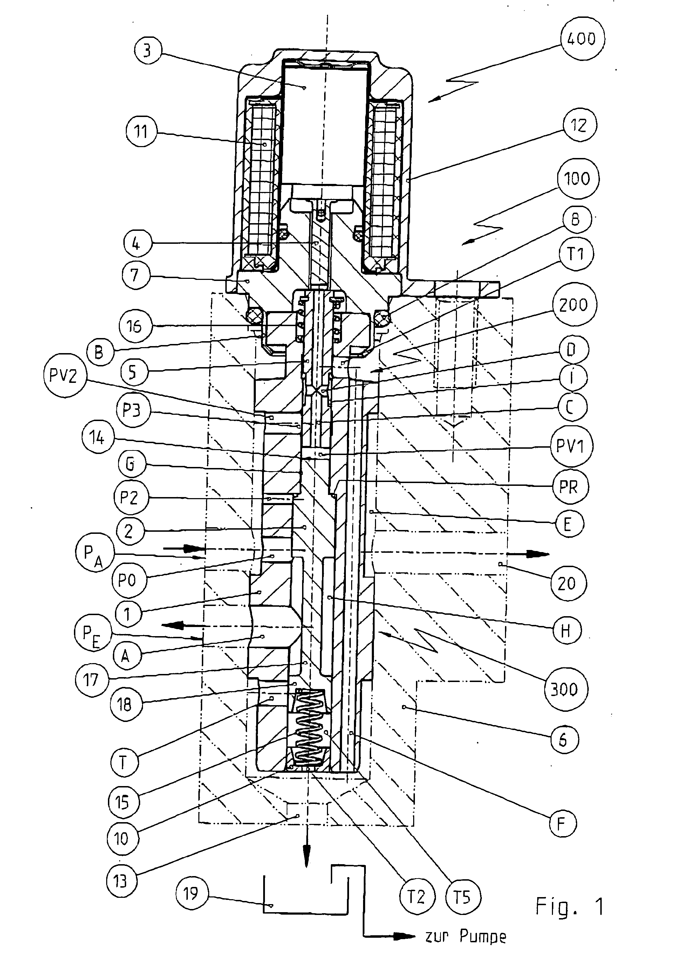

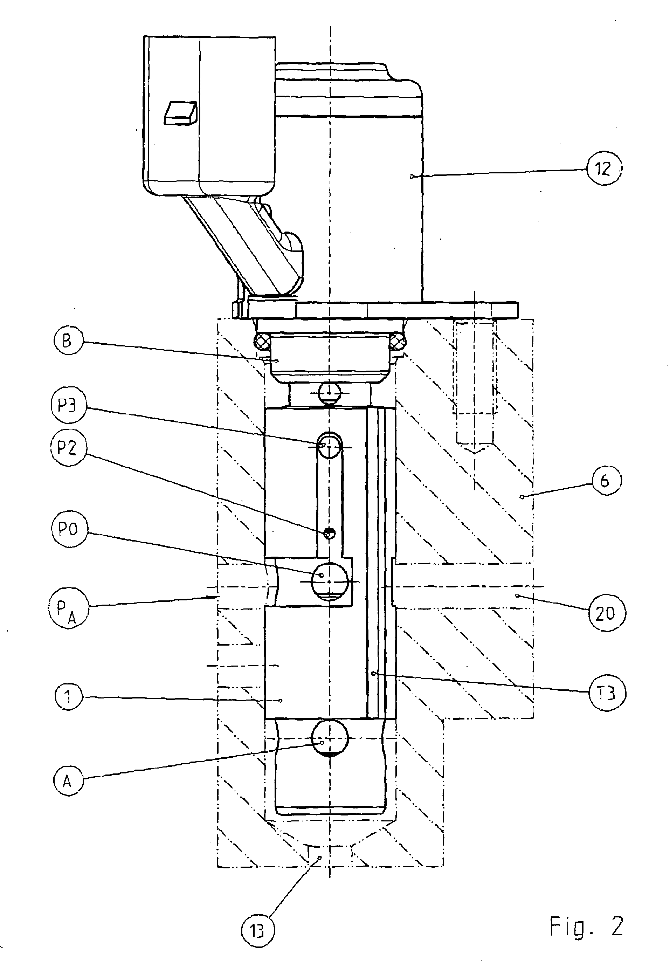

Die Bohrung T1 der Ventilhülse 1 ist über eine axiale Bohrung F der Ventilhülse 1 mit der Bohrung 13 des Steuerblocks 6 kommunizierend verbunden. Dies ist bei der Ausführungsform nach Figur 1 der Fall. Bei der Ausführungsform nach Figur 2 ist anstelle der axialen Bohrung F eine axiale Nut T3 im Außenmantel der Ventilhülse 1 vorgesehen, die die Bohrung T1 mit der Bohrung 13 kommunizierend verbindet. Die Ausformung einer entsprechenden Nut im Mantel ist bei ungenügendem Platz zu bevorzugen.

Der ventilschieber 2 stützt sich mit seinem dem Vorsteuerschieber 5 abgewandten Ende an der Druckfeder 15 ab, die mit ihrem anderen Ende an der Ventilhülse 1 gehalten beziehungsweise abgestützt ist. Die Druckfeder 15 ist beispielsweise als schraubendruckfeder ausgebildet, wobei sie an einem gelochten Endstück der Ventilhülse 1 abgestützt ist, welches einen Ausgangskanal bildet, der mit der Bohrung 13 des Steuerblocks 6 kommuniziert, die an den drucklosen Speicher (Tank) 19 anschließbar ist.

Von besonderer Bedeutung ist, dass das dem Vorsteuerschieber 5 zugewandte Ende des Ventilschiebers 2 abgestuft ist und in einen entsprechend gestuften Bereich der Ventilhülse 1 eingesetzt ist, so dass der Druck im Anschluss der Bohrung A die zum Steuereingang der Pumpe führt durch die Position des Ventilschiebers 2 bestimmt ist. Hierzu wirkt der zu regelnde Druck alternativ auf die Ringfläche PR des gestuften Bereiches des Ventilschiebers 2 oder auf die Ringfläche 2 und die Stirnfläche 14 des Ventilschiebers 2. Die Bohrung P2 der Ventilhülse 1, die mit Pumpenausgang kommuniziert, mündet im Bereich der Stufe, die die Ringfläche PR bildet, in die Ventilhülse 1 ein. Der als Stufenkolben ausgebildete Ventilschieber 2 ist so gestaltet, dass eine hydraulische Leckage zwischen den Räumen PV1 vor der Stirnfläche 14 des Ventilschiebers 2 und der Ringfläche PR durch die gewählte Passung zwischen der Ventilhülse 1 und dem verjüngten Ende G des Stufenkolbens des Ventilschiebers 2 nicht wesentlich störend ist. Ein mechanischer Kontakt zwischen Ventilschieber 2 und Ventilhülse 1 wird durch die gewählte Passung nur an den beiden Enden des Ventilschiebers 2 mit dem größten Durchmesser erreicht. Die gewählte Passung ergibt immer ein Spiel zwischen ventilschieber 2 an Zylinder 6 und der ventilhülse 1.

An das unverjüngte Ende des Stufenkolbens des Ventilschiebers 2 schließt ein verjüngter axialer Zylinder 17 an, der in ein im Durchmesser zum unverjüngten Ende gleiches Endstück 18 übergeht, an dem sich die Feder 15 abstützt, wobei die Ventilhülse 1 im Bereich des Übergangs vom Stufenkolben zum axialen Zylinder 17 die Bohrung P0, die mit dem Pumpenausgang kommuniziert, und in dem vom Endstück 18 überdeckbaren Bereich der Steuerbohrung T, die mit dem drucklosen Speicher (Tank) 19 kommuniziert, aufweist. Zusätzlich ist die Ventilhülse 1 in dem Bereich, in dem die Bohrungen P3,P2,P0 angeordnet sind, die mit dem Pumpenausgang kommunizieren, eingeschnürt oder außenumfangsseitig genutet, so dass in diesem eingeschnürten Bereich die Gehäusebohrung für den Pumpenausgang P münden kann. Die Bohrungen oder Nuten T1,T,T2,T3 der Ventilhülse 1, die überschüssiges Steuer- und/oder Lecköl drucklos in einen Speicher (Tank) führen, münden in einen radial und einseitig axial abgesetzten Bereich der Ventilhülse 1 aus, der mit der Auslaufbohrung 13 des Steuerblocks 6 kommuniziert.

Der äußere Durchmesser des Ventilschiebers 2 und die Druckfeder 15 sind jeweils so dimensioniert, dass bei einem vorbestimmten Regeldruck sich die durch den axialen Zylinder 17 gebildete Ringnut (H) des Ventilschiebers 2 in einer Druckwaage zu den Steuerbohrungen P0 und T befindet, wenn auf beide Stirnflächen der Regeldruck wirkt, weil der Raum PV1 und die Bohrung P3 durch den Vorsteuerschieber 5 kommunizierend verbunden sind. Die Bestimmung eines zweiten vorbestimmten Regelpunktes erfolgt dadurch, dass das Flächenverhältnis von der Stirnfläche 14 des ventilschiebers 2 zuzüglich der Ringfläche der Stufe an dessen Stufenkolben zu der Ringfläche gleich dem Verhältnis der beiden Drücke ist.

Die Erfindung stellt ein Fördermengenregelventil zur Verfügung, welches kostengünstig und einfach gefertigt werden kann, welches eine kompakte Bauform hat, welches einfach einstellbar ist und bei dem zudem nicht ständig Steueröl fließt.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Fördermengenregelventil 400 für liquide Medien, insbesondere zur Regelung der Ölfördermenge einer schmierölpumpe, wobei das Ventil eine hydraulische Fördermengenregelung mit einem Schieberventil mit Vorsteuerschieber (5) und einem Druckminderventil mit Ventilschieber (2) aufweist, **dadurch gekennzeichnet, dass** der Vorsteuerschieber (5) und der Ventilschieber (2) in einer Ventilhülse (1) axial verschieblich hintereinander angeordnet sind, die in, einen Steuerblock (6) eingesetzt ist, wobei der Steuerblock (6) Bohrungen (PE,PA,13,20) zum Anschluss an einen Pumpenausgang, einen Steuereingang zur Pumpe und einen drucklosen speicher (Tank) 19 aufweist, und die Ventilhülse (1) Bohrungen (T,T2,P0,P2,P3,A) aufweist, die mit der oder den Steuerblockbohrungen kommunizieren, die an den drucklosen Speicher, an den Pumpeneingang und an den Pumpenausgang angeschlossen oder anschließbar sind.

2. Fördermengenregelventil 400 nach Anspruch 1, **dadurch gekennzeichnet, dass** die ventilhülse (1) einstückig ausgebildet ist.

3. Fördermengenregelventil 400 nach einem der Ansprüche 1 oder 2, **dadurch gekennzeichnet, dass** die Ventilhülse (1) in eine Bohrung des Steuerblocks (6) eingesetzt ist, wobei an das den vorsteuerschieber (5) aufnehmende Ende der Ventilhülse (1) ein elektrischer Hubmagnet (400) mit einer Spule (11) einem Ankerkolben (3) und einer Ankerstange (4) angeschlossen ist, dessen Gehäusekappe (12) am Steuerblock (6) befestigt ist und dessen Polkern (7) gedichtet (8) in die Mündung des Steuerblocks (6) eingreift und mit der Ventilhülse (1) verbunden ist, insbesondere mittels einer Bördelung befestigt ist, wobei die Ankerstange (4) auf das dieser zugewandte Ende des Vorsteuerschiebers (5) einwirken kann oder einwirkt.

4. Fördermengenregelventil 400 nach Anspruch 3, **dadurch gekennzeichnet, dass** der Vorsteuerschieber (5) an seinem der Ankerstange (4) zugewandten Ende gegen eine Druckfeder (16) verschieblich an der Ventilhülse (1) gehalten ist.

5. Fördermengenregelventil 400 nach Anspruch 4, **dadurch gekennzeichnet, dass** die Druckfeder (16) als Schraubendruckfeder ausgebildet ist, auf das Ende des Vorsteuerschiebers (5) aufgesteckt ist und sich mit dem einen Ende an der Ventilhülse (1) und mit dem anderen Ende an einem am Endbereich des Vorsteuerschiebers (5) angeordneten Anschlag abstützt.

6. Fördermengenregelventil nach einem der Ansprüche 3 bis 5, **dadurch gekennzeichnet, dass** der Vorsteuerschieber (5) bei stromlosem Hubmagnet mit seinem dem Hubmagnet (400) zugewandten Ende am Polkern (7) anliegt.

7. Fördermengenregelventil nach einem der Ansprüche 3 bis 6, **dadurch gekennzeichnet, dass** der Vorsteuerschieber (5) eine durchgehende Längsbohrung (C) aufweist.

8. Fördermengenregelventil nach Anspruch 7, **dadurch gekennzeichnet, dass** der Vorsteuerschieber (5) eine die Längsbohrung (C) kreuzende durchgehende Querbohrung (D) aufweist, die in einer Ringnut mündet, so dass je nach Position des Ankerkolbens (3), der damit verbundenen Ankerstange (4) und damit des Vorsteuerschiebers (5) entweder bei stromlosem Hubmagnet (400) ein Raum (PV1) zwischen dem Ende des Vorsteuerschiebers (5) und dem Ventilschieber (2) mit der Bohrung (T1) der Ventilhülse (1) verbunden ist, die an den drucklosen Speicher (Tank) (19) angeschlossen ist, oder bei betätigtem Hubmagnet (400) der Raum (PV1) mit einer Bohrung (P3) der Ventilhülse (1) kommuniziert, die mit dem Pumpenausgang kommuniziert.

9. Fördermengenregelventil nach Anspruch 8, **dadurch gekennzeichnet, dass** die Mündungen der Querbohrung (D) in eine Ringnut am Außenmantel des Vorsteuerschiebers (5) übergehen.

10. Fördermengenregelventil nach einem der Ansprüche 1 bis 9, **dadurch gekennzeichnet, dass** die mit dem drucklosen Speicher (Tank) (19) kommunizierende Bohrung (13) des Steuerblocks (6) an dem Endbereich der Ventilhülse (1) vorgesehen ist, in dem das dem Vorsteuerschieber (5) abgewandte Ende des Ventilschiebers (2) angeordnet ist.

11. Fördermengenregelventil nach einem der Ansprüche 8 bis 10, **dadurch gekennzeichnet, dass** die Bohrung (T1) der Ventilhülse (1) über eine axiale Nut (T3) im Mantel der Ventilhülse (1) mit der Bohrung (13) des Steuerblocks (6) kommunizierend verbunden ist.

12. Fördermengenregelventil nach einem der Ansprüche 1 bis 11, **dadurch gekennzeichnet, dass** der Ventilschieber (2) sich mit seinem dem Vorsteuerschieber (5) abgewandten Ende an einer Feder (15) abstützt, die mit ihrem anderen Ende an der Ventilhülse (1) gehalten ist.

13. Fördermengenregelventil nach Anspruch 12, **dadurch gekennzeichnet, dass** die Druckfeder (15) als Schraubendruckfeder ausgebildet ist.

14. Fördermengenregelventil nach einem der Ansprüche 12 oder 13, **dadurch gekennzeichnet, dass** die Druckfeder (15) an einem gelochten Endstück der Ventilhülse (1) abgestützt ist, welches einen Hülsenausgangskanal bildet, der mit einer Bohrung (13) des Steuerblocks (6) kommuniziert, die wiederum mit dem drucklosen Speicher (Tank) (19) kommuniziert.

15. FÖrdermengenregelventil nach einem der Ansprüche 1 bis 14, **dadurch gekennzeichnet, dass** das dem Vorsteuerschieber (5) zugewandte Ende des ventilschiebers (2) abgestuft ist und in einen entsprechend gestuften Bereich der Ventilhülse (1) eingesetzt ist, so dass der Druck im Anschluss der Bohrung (A) die zum Steuereingang der Pumpe führt durch die Position des Ventilschiebers (2) bestimmt ist, wobei der zu regelnde Druck alternativ auf die Ringfläche (PR) des gestuften Bereichs des ventilschiebers (2) oder auf die Ringfläche (PR) und die Stirnfläche (14) des Ventilschiebers (2) wirkt.

16. Fördermengenregelventil nach Anspruch 15, **dadurch gekennzeichnet, dass** die Bohrung (P2) der Ventilhülse (1), die mit dem Pumpenausgang kommuniziert, im Bereich der Stufe, die die Ringfläche (PR) bildet, in die Ventilhülse (1) mündet.

17. Fördermengenregelventil nach einem der Ansprüche 15 oder 16, **dadurch gekennzeichnet, dass** der als Stufenkolben ausgebildete Ventilschieber (2) so gestaltet ist, dass eine hydraulische Leckage zwischen den Räumen (PV1) vor der Stirnfläche (14) des Ventilschiebers (2) und der Ringfläche (P2) durch die gewählte Passung zwischen Ventilhülse (1) und dem verjüngten Ende (G) des Stufenkolbens des Ventilschiebers (2) nicht wesentlich störend ist.

18. Fördermengenregelventil nach Anspruch 17, **dadurch gekennzeichnet, dass** die gewählte Passung einen mechanischen Kontakt zwischen Ventilhülse (1) und Ventilschieber (2) nur durch einen im Abschnitt des verjüngten Endes (G) des Ventilschiebers (2) nicht zulässt.

19. Fördermengenregelventil nach einem der Ansprüche 15 bis 18, **dadurch gekennzeichnet, dass** an das unverjüngte Ende des Stufenkolbens des ventilschiebers (2) ein verjüngter axialer Zylinder (17) anschließt, der in einem im Durchmesser zum verjüngten Ende gleiches Endstück (18) übergeht, an dem sich die Feder (15) abstützt, wobei die Ventilhülse (1) im Bereich des Übergangs vom stufenkolben zum Axialsteg (17) die Bohrung (P0), die mit dem Pumpenausgang kommuniziert, und im von dem Endstück (18) überdeckbaren Bereich die Bohrung (T), die mit dem drucklosen Speicher (Tank) (19) kommuniziert, ausgebildet ist.

20. Fördermengenregelventil nach einem der Ansprüche 1 bis 19, **dadurch gekennzeichnet, dass** die Ventilhülse (1) in dem Bereich, in dem die Bohrungen (P3,P2,P0) angeordnet sind, die mit dem Pumpenausgang kommunizieren, eingeschnürt ist und in den eingeschnürten Bereich die Steuerblockbohrung für den Pumpenausgang mündet.

21. Fördermengenregelventil nach einem der Ansprüche 1 bis 20, **dadurch gekennzeichnet, dass** die Bohrungen oder Nuten (T1,T,T2,T3) der Ventilhülse (1), die überschüssiges Steuer- und/oder Lecköl drucklos in einen Speicher führen, in einem radial und einseitig axial abgesetzten Bereich der Ventilhülse (1) ausmünden, der mit einer Ablaufbohrung (13) des Steuerblocks (6) kommuniziert.

22. Fördermengenregelventil nach einem der Ansprüche 19 bis 21, **dadurch gekennzeichnet, dass** der Durchmesser des Ventilschiebers (2) und die Feder (15) so dimensioniert sind, dass bei einem vorbestimmten Regeldruck sich die durch den axialen Zylinder (17) gebildete Nut des Ventilschiebers (2) in einer durch eine Druckwaage gebildeten Position zu den Steuerbohrungen (P0 und T) befindet, wenn auf beide Stirnflächen der Regeldruck wirkt, weil der Raum (PV1) und die Bohrung (P3) durch den Vorsteuerschieber (5) kommunizierend verbunden sind, wobei ferner die Bestimmung eines zweiten vorbestimmten Regelpunktes **dadurch** erfolgt, dass das Flächenverhältnis von Stirnfläche (14) des Ventilschiebers (2) zuzüglich der Ringfläche der Stufe von dessen Stufenkolben zu der Ringfläche gleich dem Verhältnis der beiden Drücke ist.
